# FASCICULE DE BREVET EUROPEEN

(11) **EP 0 584 305 B1**
(45) Date de publication et mention de la délivrance du brevet: **10.12.1997**
(21) Numéro de dépôt: 93903784.2
(22) Date de dépôt: 04.03.1993
(51) Int. Cl.: C10G 32/02, C11B 3/00, B01D 21/00, B01D 17/06

(54) **PROCEDE DE PURIFICATION D'UN LIQUIDE ELECTRIQUEMENT NON CONDUCTEUR**
VERFAHREN ZUR REINIGUNG EINER NICHT ELEKTRISCH LEITENDEN FLÜSSIGKEIT
METHOD FOR PURIFYING A NON-ELECTRICALLY CONDUCTIVE LIQUID

(30) Priorité: 05.03.1992 FR 9202808
(43) Date de publication de la demande: 02.03.1994
(73) Titulaire: FREI, Charles, CH-1213 Onex (CH)
(72) Inventeur: FREI, Charles, CH-1213 Onex (CH)
(74) Mandataire: Savoye, Jean-Paul
(86) Numéro de dépôt international: CH9300056
(87) Numéro de publication internationale: WO9318113

(56) Documents cités:
- GB-A- 494 153
- US-A- 1 931 725
- US-A- 2 261 108
- US-A- 2 447 530
- US-A- 3 589 991
- US-A- 3 682 807
- US-A- 3 857 770

## Description

La présente invention concerne un procédé de purification d'un liquide électriquement non conducteur, notamment d'une huile d'origine minérale, végétale, animale ou synthétique, ce liquide étant contaminé par des particules contaminantes finement divisées en suspension dans ce liquide, dans lequel on crée un champ électrique élevé au moyen d'au moins deux électrodes, et l'on ajoute préalablement audit liquide à purifier, un additif contenant un ou plusieurs composés chimiques qui s'attachent auxdites particules par adsorption physique ou liaisons chimiques.

On décrit aussi le dispositif de purification d'un liquide électriquement non conducteur, notamment d'une huile d'origine minérale, végétale, animale ou synthétique, ce liquide étant contaminé par des particules contaminantes finement divisées en suspension dans ce liquide, ce dispositif contenant un bac pour contenir ledit liquide à purifier, éventuellement des moyens pour maintenir ou pour amener ce liquide à une température plus élevée que la température ambiante, au moins deux électrodes disposées à l'intérieur ou à l'extérieur de ce bac, une partie d'au moins une desdites électrodes étant mobile, des moyens pour appliquer un champ électrique élevé entre ces deux électrodes, et un dispositif d'injection d'un additif contenant un ou plusieurs composés chimiques pour la mise en oeuvre de ce procédé.

Le principe de purification d'un liquide par application d'un champ électrique uniforme ou variable entre deux électrodes plongées dans ce liquide, appelé précipitation électrostatique, est connu en soi. Lorsque le liquide à purifier est isolant et contient de fines particules, notamment des particules solides en suspension, ce mode de purification se révèle souvent peu satisfaisant ou totalement inefficace. Parmi les méthodes classiques de séparation d'un liquide et d'un solide telles que la filtration, la décantation, la centrifugation, la distillation etc., ce sont actuellement les méthodes de filtration qui sont très largement utilisées pour débarrasser les liquides des particules contaminantes. Ces méthodes consistent à faire passer le liquide contaminé par une ou plusieurs nappes filtrantes, c'est-à-dire à effectuer une sorte de "tamisage" fin, mais les orifices ou les porosités desdites nappes filtrantes s'encrassent rapidement et nécessitent soit un nettoyage, soit un remplacement régulier.

La présente invention se propose de pallier ces inconvénients en réalisant un procédé de purification basé sur le principe de la précipitation électrostatique, et qui reste cependant efficace pour purifier les liquides isolants, et en particulier pour purifier ou régénérer les huiles à base d'hydrocarbures, notamment les liquides diélectriques utilisés dans les machines à électro-érosion, les huiles hydrauliques, les huiles de transformateurs, les carburants, ou pour raffiner les huiles alimentaires.

Dans ce but, le procédé selon l'invention est conforme à la revendication 1.

L'on peut purifier ledit liquide en extrayant les particules contaminantes en ajoutant successivement à ce liquide plusieurs additifs agissant différemment sur différents types de particules contaminantes.

De préférence, l'on sélectionne ledit additif de telle manière que la polarité des charges électriques qui se fixent aux agents contaminants est, soit uniquement positive soit uniquement négative, de sorte que leur précipitation n'ait lieu que sur une desdites deux électrodes. En agissant de la sorte, il est possible de maintenir propre l'électrode qui se trouve au potentiel électrique élevé, et de collecter les déchets sur l'électrode branchée au potentiel de la terre.

Afin d'obtenir une meilleure purification des liquides ayant une teneur élevée en agents contaminants, l'on peut effectuer initialement une dilution du liquide à purifier en recyclant une partie du filtrat obtenu après purification et en le réinjectant dans le liquide à purifier.

Dans le cas où le liquide à purifier contient un agent contaminant en solution et où on ajoute à l'additif des particules ayant un pouvoir d'adsorption dudit agent contaminant élevé, lesdites particules à pouvoir d'adsorption élevé peuvent comporter du charbon actif, de l'alumine, de la silice activée, de la zéolithe, de l'argile, de la terre de sommières, de la cellulose ou des résines et notamment des résines échangeuses d'ions. Cette matière qui sert à adsorber l'agent contaminant en solution sera ensuite éliminée selon le procédé qui sera décrit ci-après.

Dans une forme de réalisation préférée, la partie mobile d'au moins une desdites électrodes est constituée par une bande souple sans fin métallique, entraînée en continu pour plonger momentanément dans le bac de liquide à purifier et pour sortir de ce liquide chargé de particules contaminantes, et associée à un organe agencé pour détacher les particules contaminantes précipitées adhérant à ladite partie mobile.

Selon une autre forme de réalisation la partie mobile d'au moins une desdites électrodes peut être constituée par une bande souple réalisée en une matière isolante et associée à une plaque métallique fixe.

De préférence, ledit organe agencé pour détacher les particules contaminantes précipitées adhérant à ladite partie mobile d'une des électrodes peut comporter au moins un racloir situé à l'extérieur du liquide à purifier ou au moins une buse d'aspiration.

La présente invention sera mieux comprise en référence à la description d'exemples de réalisation et du dessin annexé dans lequel :

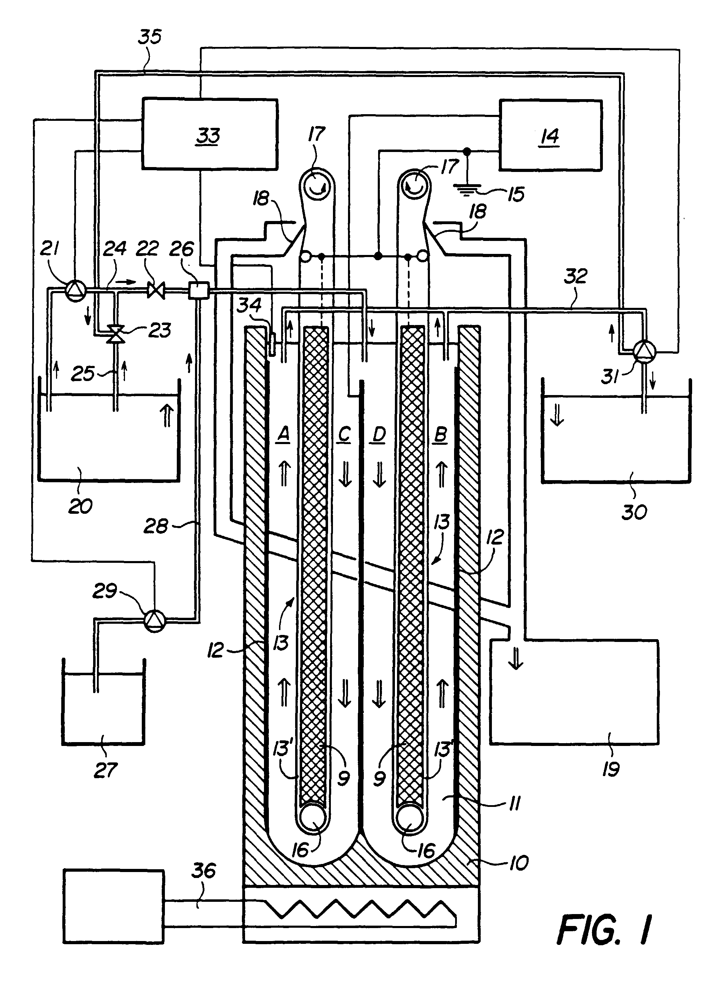

la figure 1, qui est unique, illustre de façon schématique une forme de réalisation préférée du dispositif utilisé dans l'invention.

Ce dispositif offre un moyen de séparation permettant de purifier ou de décontaminer des liquides isolants qui contiennent des particules contaminantes finement divisées, notamment des particules solides en suspension. Ces particules peuvent être de nature métallique ou non métallique. Leur taille est limitée vers le haut par la possibilité de rester en suspension et s'étend vers le bas dans le domaine des colloïdes très fins. Ceci signifie que les particules les plus grandes ont un diamètre d'environ 10 µm, et que les particules les plus petites ont une taille qui avoisine celle des macromolécules.

Le dispositif représenté par la figure comporte un bac 10 contenant le liquide diélectrique à purifier 11 et au moins deux électrodes respectivement 12 et 13 pour l'application d'un champ électrique à l'intérieur du bac 10. Dans la présente réalisation, l'électrode 12, qui est connectée à une source de haute tension 14, est fixe alors que l'électrode 13, qui est connectée à la terre 15, est mobile et peut être extraite d'une manière alternative ou continue. A cet effet l'électrode 13 mobile se compose d'une bande souple sans fin 13', montée entre deux rouleaux 16 et 17, et d'un noyau 9 central fixe allongé disposé dans l'espace séparant les deux branches de la bande souple 13'. Ce noyau central est prévu pour empêcher que le liquide à purifier pénètre dans l'espace séparant les deux branches de la bande ou qu'il contourne les parties latérales de cette bande. Le rouleau 16 est conçu pour tourner librement autour de son axe et le rouleau 17 est entraîné par un mécanisme quelconque non représenté qui peut être manuel ou électrique. La bande souple 13' peut être constituée par une feuille métallique, une grille métallique, une feuille isolante métallisée ou réalisée en une matière isolante sans composants métalliques. Lorsque la bande souple 13' est métallique et raccordée à la terre 15, le noyau central 9 peut être également métallique ou réalisé en une matière isolante. Par contre lorsque la bande 13' est réalisée en une matière isolante, le noyau central 9 doit être métallique et raccordé à la terre 15. Il remplit alors la fonction d'une électrode et établit le champ électrique nécessaire pour que les particules contaminantes soient précipitées sur la bande transporteuse isolante. Cette électrode et la contre électrode établissent le champ électrique dans lequel plonge la bande souple en matière isolante.

Les raisons qui sont en faveur de l'utilisation d'une bande souple en matière isolante peuvent être le fait que les particules contaminantes s'y attachent mieux, étant donné que leurs charges électriques ne seront pas neutralisées ou inversées. Aussi il existe un plus grand choix parmi les substances constituant l'additif pour favoriser l'attachement des particules contaminantes à la bande transporteuse. D'autre part, en choisissant une matière adéquate on peut ainsi contrôler la qualité de l'attachement des particules.

Bien que le système puisse fonctionner avec une seule électrode 13 et une seule électrode 12, le rendement de l'installation est considérablement augmenté si l'on prévoit plusieurs électrodes de masse 13 et plusieurs électrodes de haute tension 12. Dans la réalisation représentée, on a prévu trois électrodes 12 de haute tension et deux électrodes 13 mobiles connectées à la terre, respectivement disposées entre deux électrodes 12. Le nombre des électrodes n'est pas limité et il est envisageable de prévoir des batteries d'électrodes lorsque les volumes de liquide à traiter sont plus importants.

Chaque électrode mobile 13 est associée à un racloir 18 qui frotte contre la bande sans fin constituant cette électrode pour la débarrasser de la couche de particules contaminantes qui se sont déposées sur elle au cours du traitement, comme cela sera décrit plus en détail ci-dessous.

Les racloirs 18 sont connectés à un bac de récupération 19 des déchets.

L'installation est complétée par un dispositif d'amenée du liquide à purifier comportant un bac d'approvisionnement 20, une pompe 21, deux vannes 22 et 23 respectivement montées sur un conduit direct 24 et un conduit de retour 25. Un dispositif d'injection 26 de l'additif est également monté sur le conduit direct 24 et assure le mélange complet de l'additif avec le liquide à purifier. Il est relié à un réservoir 27 contenant ledit additif qui est canalisé par un conduit 28 sur lequel est montée une pompe doseuse 29.

Le choix de l'additif est crucial pour le bon fonctionnement du dispositif de purification. Il dépend de la nature des substances contaminantes en présence et sa préparation sous forme de solution est particulièrement avantageuse lorsqu'on prévoit de procéder à son mélange avec le liquide à purifier à l'aide d'une pompe doseuse et d'un dispositif d'injection.

Cet additif doit contenir au moins un composé chimique ayant les propriétés suivantes :
- il s'attache aux particules solides qui se trouvent dans le liquide à purifier ainsi qu'à au moins une des électrodes, soit par adsorption physique, soit par liaisons chimiques, soit par attraction électrique.
- il confère à ces particules solides des charges électriques par la dissociation de ses molécules dans le liquide à purifier.
- il empêche l'agglomération, la coagulation ou la floculation des particules solides dans le liquide à purifier,
- il peut être mis en solution, en solution micellaire ou en solution colloïdale, complètement miscible avec le liquide à purifier.

La quantité de composés chimiques dans l'additif nécessaire pour la purification s'oriente d'après la quantité de matière contaminante présente dans le volume donné de liquide à purifier. Elle est du même ordre de grandeur mais peut être nettement inférieure à celui-ci, et dépend du pouvoir d'adsorption ainsi que de la charge électrique des composés chimiques choisis.

Un bac 30 permet de récupérer le liquide purifié aspiré au haut du bac 10, dans les zones latérales disposées à l'extérieur des deux électrodes mobiles, par une pompe 31 montée sur un conduit approprié 32.

Un dispositif de contrôle du niveau 33 est associé à un capteur de niveau 34 plongé dans le bac 10 et pilote les pompes 21, 31 et 29.

Dans le cas où la concentration des particules contaminantes est trop élevée pour assurer une bonne purification du liquide, une partie du liquide purifié contenu dans le bac 30 est ramené, au niveau de la pompe 31, par un conduit 35 dans le conduit d'amenée 24 du liquide à purifier pour abaisser la concentration des particules contaminantes à l'arrivée de ce liquide.

Etant donné qu'à température ambiante certaines huiles sont très visqueuses ou même solides et qu'en les chauffant à une température suffisamment élevée elles deviennent assez fluides pour être purifiées dans le dispositif selon l'invention, un élément chauffant 36 est prévu pour maintenir ou pour amener le liquide à purifier à la température voulue. Cette élévation de température ne permet pas seulement de diminuer la viscosité de l'huile mais permet également d'accélérer le processus de précipitation. En conséquence, cette technique peut également s'avérer utile pour des liquides déjà suffisamment fluides à température ambiante.

Dans la pratique, le dispositif décrit fonctionne de la manière suivante: le liquide à purifier est transvasé du bac d'approvisionnement 20 dans le bac 10, dans deux couloirs C et D définis chacun par une électrode fixe 12 et la paroi d'une électrode mobile 13. L'électrode mobile se déplace dans le sens ascendant et le liquide à purifier circule dans le sens inverse. Le mélange intime de l'additif avec le liquide à purifier, qui est assuré grâce à l'injecteur à l'entrée du liquide à purifier, occasionne la rencontre entre les molécules actives de l'additif et les particules contaminantes et provoque leur attachement respectif. Etant donné que ces molécules actives, ou une partie d'elles, ont acquis une charge électrique par dissociation dans le liquide à purifier, il s'ensuit que les particules contaminantes elles-mêmes deviennent porteuses d'une charge électrique. Au cas où celles-ci possèdent dès le départ une charge électrique, la charge additionnelle rend la méthode de purification encore plus efficace. Sous l'effet du champ électrique élevé appliqué à ce liquide par les électrodes les particules contaminantes vont s'éloigner de l'électrode dont la polarité est la même que celle de leur charge et migrer vers l'électrode dont la polarité est opposée à celle de leur charge. D'autre part le déplacement de ces particules dû à la migration sous l'effet de la force électrique est renforcé par les mouvements turbulents du liquide ayant leur origine dans l'instabilité électrohydrodynamique du liquide soumis au champ électrique. Les mécanismes d'attachement entre les molécules actives de l'additif et les particules contaminantes sont également responsables de l'attachement des particules contaminantes aux électrodes. Au cas où ils s'avéreraient insuffisants, il suffit de sélectionner des composés chimiques adéquats et de les ajouter à l'additif en vue de satisfaire à cette fonction. Ce processus se poursuit dans les zones latérales, c'est-à-dire dans les deux couloirs A et B respectivement définis par les électrodes fixes latérales 12 et les autres parois des électrodes mobiles 13. Dans ces couloirs les électrodes mobiles se déplacent dans le sens descendant alors que le liquide qui circule de bas en haut. Lorsqu'il arrive dans la zone supérieure il est en principe décontaminé. Au cas où il ne serait pas totalement purifié, on peut prévoir un deuxième dispositif identique ou différent, voire plusieurs dispositifs successifs destinés à compléter la purification du liquide pour en extraire toutes les particules contaminantes qui peuvent être identiques ou différentes.

Si le liquide à purifier n'est contaminé que par des particules solides, il suffit pour le décontaminer de le traiter avec l'additif tel qu'il a été décrit dans ce qui précède.

Au cas où le liquide à purifier contient un agent contaminant en solution, par exemple des colorants non désirables ou de l'eau en solution qu'il faut éliminer, il convient d'ajouter à l'additif, tel que décrit ci-dessus, des particules finement divisées ayant un pouvoir d'adsorption élevé pour ces agents contaminants (méthode de purification par alluvionnage). A titre d'exemple de telles particules à pouvoir d'adsorption élevé, on peut citer les poudres composées de charbon actif, d'alumine, de silice activée, de zéolite, d'argile, de terre de Sommières, de cellulose ou de résines, et notamment de résines échangeuses d'ions.

Si le liquide à purifier contient un agent contaminant en solution ou en suspension, et des particules solides contaminantes, il suffit de confectionner l'additif de sorte qu'il puisse faire précipiter toutes les particules se trouvant dans le liquide à purifier, celles déjà présentes initialement ainsi que celles ajoutées ultérieurement.

L'ensemble peut bien entendu être automatisé et le traitement de liquides à purifier peut être programmé en fonction de la nature de ces liquides et de la nature ou de la composition des particules contaminantes.

Le champ électrique appliqué aux électrodes qui sont de préférence distantes de quelques centimètres est de l'ordre de 5 à 15 KV/cm. L'intensité du courant est typiquement inférieure à 10 µA. Le déplacement de l'électrode mobile s'effectue à faible vitesse, de l'ordre de quelques millimètres par seconde.

Le dispositif n'est pas limité aux formes de réalisations décrites. En particulier, les racloirs 18 servant à la récupération des particules contaminantes peuvent être remplacés par des buses d'aspiration. L'on peut également prévoir d'ajouter au dispositif de contrôle de niveau un dispositif de contrôle de contamination en associant un capteur du degré de contamination à la sortie du liquide. Les électrodes 13 peuvent être recouvertes de matière isolante, de manière fixe ou détachée. Dans une autre forme de réalisation du dispositif les électrodes fixes peuvent être situées à l'extérieur du bac contenant le liquide à purifier.

## Revendications

1. Procédé de purification d'un liquide électriquement non conducteur, notamment d'une huile d'origine minérale, végétale, animale ou synthétique, ce liquide étant contaminé par une matière finement divisée à l'état particulaire, colloïdal ou jusqu'à une taille avoisinant celle des macromolécules, dans lequel on crée un champ électrique élevé entre au moins deux électrodes, selon lequel on ajoute préalablement audit liquide à purifier un additif contenant au moins un composé chimique qui s'attache à ladite matière contaminante finement divisée par adsorption physique ou liaison chimique, caractérisé par le fait que ledit composé chimique de l'additif est en solution, en solution micellaire ou en solution colloïdale, complètement miscible avec le liquide à purifier et qu'il s'agit d'un copolymère séquencé possédant au moins une composante soluble dans le liquide à purifier et au moins une composante non soluble dans ce liquide, et les molécules de ce composé chimique réunissant les propriétés suivantes:
- elles portent des charges électriques provenant de la dissociation des molécules dans le liquide à purifier.
- elles s'attachent auxdites électrodes par liaison chimique, adsorption physique ou attraction électrique.

2. Procédé selon la revendication 1, caractérisé par le fait que l'on purifie ledit liquide en extrayant les particules contaminantes en ajoutant successivement à ce liquide plusieurs additifs agissant différemment sur différents types de particules contaminantes.

3. Procédé selon l'une des revendications précédentes, caractérisé en ce que l'on sélectionne ledit additif de telle manière que la polarité des charges électriques qui se fixent aux particules contaminantes et/ou aux composés contaminants est, soit uniquement positive, soit uniquement négative, de sorte que leur précipitation n'ait lieu que sur lesdites électrodes possédant l'une des deux polarités.

## Patentansprüche

1. Verfahren zum Reinigen von elektrisch nicht-leitenden Flüssigkeiten, insbesondere mineralischen, pflanzlichen, tierischen oder synthetischen Oelen, wobei diese Flüssigkeiten durch feinverteilte Partikel verunreinigt sind, deren Grössenverteilung den Bereich von Staubteilchen bis hinab zu Kolloïdalteilchen von makromolekularen Dimensionen umfasst, und wobei in diesen Flüssigkeiten ein hohes elektrisches Feld zwischen mindestens zwei Elektroden erzeugt wird, dadurch gekennzeichnet, dass der zu reinigenden Flüssigkeit vor der Anwendung des elektrischen Feldes ein Additiv beigemischt wird, welches mindestens eine chemische Verbindung enthält, die sich an die die Verunreinigung bildenden feinverteilten Partikel mittels physikalischer Adsorption oder chemischer Bindung anlagert, in welchem besagte chemische Verbindung als Lösung, miszellare oder kolloidale Dispersion vorliegt, die mit der zu reinigenden Flüssigkeit vollständig mischbar ist, und in welchem besagte chemische Verbindung aus einem Block-Copolymer besteht, das aus mindestens einer in der zu reinigenden Flüssigkeit löslichen Komponente und aus mindestens einer in dieser Flüssigkeit unlöslichen Komponente aufgebaut ist, wobei die Moleküle dieser chemischen Verbindung folgende Eigenschaften besitzen :
- sie weisen eine elektrische Ladung auf, die von der Dissoziation dieser Moleküle in der zu reinigenden Flüssigkeit stammt ;
- sie lagern sich an die zuvorgenannten Elektroden mittels chemischer Bindung, physikalischer Adsorption oder elektrischer Anziehung an.

2. Verfahren nach Anspruch 1, dadurch gekennzeichnet, dass die die Verunreinigung verursachenden Partikel aus der zu reinigenden Flüssigkeit entfernt werden, indem dieser Flüssigkeit mehrere Additive beigemischt werden, wobei jedes Additiv spezifisch auf die verschiedenartigen vorhandenen Verunreinigungspartikel reagiert.

3. Verfahren nach Anspruch 1 bis 2, dadurch gekennzeichnet, dass die zuvorgenannten Additive so ausgewählt werden, dass die Polarität der elektrischen Ladungen, welche sich an die Verunreinigungen anlagern, entweder ausschliesslich positiv oder ausschliesslich negativ ist, so dass die entsprechenden Abscheidungen nur entweder auf den negativen oder nur auf den positiven Elektroden erfolgen.

## Claims

1. A method of purifying an electrically non-conducting liquid. specifically mineral, vegetable, animal or synthetic oil, said liquid being contaminated with particulate finely separated whose size extends from powder particles to colloidal particles whose size can be as small as that of large molecules, said liquid being subjected to a high electric field generated between at least two electrodes, characterized in that it comprises the step of adding an additive, to said liquid to be purified, comprising at least one chemical compound for attaching to said contaminant by one of physical adsorption and chemical bonding, and said at least one chemical compound having molecules which have in addition the following properties :
- forming a solution, a micellar solution or a colloidal solution that is entirely miscible in said liquid to be purified;
- forming a block copolymer comprising a component which is soluble in said liquid to be purified and at least one component which is not soluble in said liquid;
- forming an electrical charge originating from dissociation of the molecules added to said liquid to be purified;
- being attachable to one of said electrodes by one of chemical bonding, physical adsorption and electrical attraction.

2. A method according to claim 1 further characterized in that it comprises the step of extracting the contaminant from said liquid to be purified by successively introducing into said liquid to be purified a plurality of additives which facilitate electrical precipitation of various types of contaminant particles contained within said liquid to be purified.

3. A method according to any one of the preceding claims, further characterized in that it comprises the step of selecting said additive, which is attachable to said contaminant, to comprise one of a positive electrical charge and negative electrical charge so as to precipitate said contaminant either on the electrodes being cathode or else on the electrodes being anode.
